# EUROPEAN PATENT SPECIFICATION

(11) **EP 2 714 387 B1**
(45) Date of publication and mention of the grant of the patent: **16.10.2019**
(21) Application number: 12793589.8
(22) Date of filing: 29.05.2012
(51) Int. Cl.: C04B 35/5831, B23B 27/14, B24D 3/06, B24D 18/00, C23C 28/04, C23C 30/00

(54) **METHOD OF MAKING A MULTI-LAYER COATING WITH CUBIC BORON NITRIDE PARTICLES**
VERFAHREN ZUR HERSTELLUNG EINER MEHRSCHICHTIGEN BESCHICHTUNG MIT KUBISCHEN BORNITRIDPARTIKELN
PROCÉDÉ DE PRÉPARATION D'UN REVÊTEMENT MULTICOUCHE RENFERMANT DES PARTICULES DE NITRURE DE BORE CUBIQUE

(30) Priority: 27.05.2011 US 201161490730 P; 27.05.2011 US 201161490719 P
(43) Date of publication of application: 09.04.2014
(73) Proprietor: Nanomech Inc., Fayetteville, AR 72701 (US); The Board of Trustees of The University of Arkansas, Little Rock, AR 72207-3608 (US)
(72) Inventor: JIANG, Wenping, Fayetteville, AR 72703 (US); MALSHE, Ajay, P., Springdale, AR 72762 (US)
(74) Representative: Williams Powell
(86) International application number: PCT/US2012/039894
(87) International publication number: WO 2012/166747

(56) References cited:
- JP-A- H04 337 064
- US-A- 3 982 911
- US-A- 4 837 230
- US-A- 5 928 771
- US-A1- 2003 087 749
- US-A1- 2005 210 755
- US-A1- 2006 199 013
- US-A1- 2007 175 103
- US-A1- 2007 175 103
- US-A1- 2009 297 720
- US-A1- 2010 288 817
- US-A1- 2010 288 817

## Description

### BACKGROUND OF THE INVENTION

Coatings are effective for improving the performance of various materials, such as for achieving better wear resistance and corrosion resistance. Common applications where a coating is applied to a substrate to improve wear resistance of the substrate material include cutting tool inserts for the cutting of hard materials, such as steel. Common substrate materials for cutting tools may include, for example, hard metals of different particle sizes with a varied percentage of cobalt or nickel as a binder material.

Boron nitride (BN) is a well-known material that, due to its thermal and chemical stability, is widely used in the fabrication of parts for high-temperature applications. It exists amorphously and in several crystalline forms. Cubic boron nitride (cBN) is a crystalline form that, due to its very high hardness value and relatively low cost, is widely used in various cutting applications as an abrasive. Since it is relatively insoluble in iron, nickel, and related alloys at high temperature, it is widely used in place of diamond for the cutting and machining of steel.

The art also includes various methods of coating parts, such as inserts for cutting tools and machines, with layers of cBN. The process used has been the application of cBN in pure, non-composite phase. This application of a pure cBN layer by vapor depositions is mad with a coating thickness limited to less than about 2 to 3 microns. It has been found, however, that such a coating configuration has limitations for delivering multiple-functional requirements such as toughness, thermal stability, and wear resistance. These parameters are of critical importance in certain applications, such as in coatings for cutting tool inserts, and for this reason an improved coating material is with better toughness, thermal stability, and wear resistance is desired.

US 2010/0288817 A1 (Yao) discloses gradient polycrystalline cubic boron nitride (PCBN) materials, are provided as well as tools incorporating such materials.

US 2007/0175103 A1 (Sigalas) discloses a method of producing a tool component comprising a working portion of bonded abrasive particles including a non-homogeneous region. The method includes the step of providing at least two sources of a material comprising abrasive particles in a suitable binder, the materials of the sources differing from each other. The material of one source may comprise diamond or cubic boron nitride particles, whilst the material of the other source may comprise carbide particles. Alternatively, the materials of the two sources may contain the same abrasive particle, such as diamond or cubic boron nitride particles, but in different particle sizes. The materials are delivered to a zone where mixing occurs, and the mixture is applied to a surface to produce a layer of the mixed materials on the surface, typically by spraying. By controlling the quantity of material from each source which is delivered to the mixing zone, different mixtures of the two abrasives can be created. In this way, layers, e.g. one on top of the other, can be produced which differ from their neighbours in abrasive particle composition. These layers, on sintering, form non-homogeneous regions in the working portion of a tool component.

US 2005/0210755 A1 (Cho) discloses a doubled-sided PCBN and/or PCD compact can be produced using high pressure high temperature processes allowing for increased effective thickness of abrasive tools, decreased delamination, and increased useful service life. A polycrystalline compact can include a substrate having a first surface and a second surface which are non-contiguous. Additionally, a first polycrystalline layer can be attached to the first surface of the substrate and a second polycrystalline layer attached to the second surface of the substrate. The first and second polycrystalline layers can be attached to the substrate via an intermediate layer containing superabrasive particles. Such double-sided PCBN and PCD compacts allow for increased effective thickness of a tool without suffering from non-homogenous results typical of standard PCD and PCBN compacts, regardless of superabrasive particle size. Each polycrystalline layer can include superabrasive particles of varying particle sizes such that the final tool is tailored for specific abrading characteristics. Such doubled-sided PCBN and PCD compacts can be incorporated into a wide variety of abrasive tools for use in cutting, milling, grinding, polishing, drilling and other similar abrasive applications.

US 2006/0199013 A1 (Malshe) discloses compositions comprising nanoparticles, microparticles, and combinations thereof, the particles may be overcoated particles. Composite coatings and coated articles made therefrom, the coatings comprising mono or multi layers having a textured outer surface morphology, the layers may be continuous and/or discontinuous and may comprise different particle phases. Methods of making and using said compositions, coatings and coated articles.

US 5,928,771 (DeWald, Jr) discloses a coating of cubic boron nitride dispersed in a matrix of disordered boron and carbon, such as boron carbide, is provided by sputtering. The coating is wear resistant, adherent, lubricous, and suitable as a coating for tools, molds, and wear parts. The coating has first, second, and third regions. The first region is sputtered in an inert atmosphere onto a substrate such as tool steel and is at least one layer of disordered boron and carbon. The inert sputtering atmosphere is gradually replaced with nitrogen to form the second region, which has cubic boron nitride crystals in a gradually increasing concentration dispersed in a matrix of disordered boron and carbon. The third region atop the second region is an outer wear layer that has a substantially uniform concentration throughout of cubic boron nitride dispersed in disordered boron and carbon.

In accordance with the present invention, there is provided a method of forming a multi-layer coated substrate, comprising the steps of: a. spraying a first ceramic material onto the substrate to form a ceramic layer, wherein the ceramic material is formed of at least one of carbides, carbonitrides, borides, carbon, and oxides; b.spraying cBN particles onto the ceramic layer; c. infiltrating a second ceramic material into the cBN particles wherein the second ceramic material is chosen from the set consisting of carbides, carbonitrides, borides, carbon, and oxides, and wherein the infiltration step is performed by a chemical vapor infiltration (CVI) process to create a composite cBN particle layer; d. bonding the cBN composite layer by a method selected from the set consisting of microwave sintering, infrared (IR) heating or, laser radiation; and e. spraying a third ceramic material onto the cBN composite layer to form a second ceramic layer, wherein the ceramic material comprises at least one of carbides, carbonitrides, borides, carbon, and oxides.

### BRIEF DESCRIPTION OF THE SEVERAL VIEWS OF THE DRAWINGS

Fig. 1 is an illustration of a substrate with multiple coatings according to a first embodiment of a method of making of a coated substrate not according to the present invention.
Fig. 2 is an illustration of a substrate with multiple coatings according to a second embodiment, which is a method of making a coated substrate according to the present invention.

### DETAILED DESCRIPTION OF THE PREFERRED EMBODIMENT(S)

According to various embodiments of the present invention as used in connection with a coated substrate, the coating configuration may be: (1) a cBN-based composite coating in repetitive units with a ceramic layer as interfacial layer; (2) a cBN-based composite coating with different binder phases stacked in layered form on the composite coating; and (3) a cBN-based composite coating together with other layers of individual or combinatorial ceramic phases. In each case, the inventors have found that the resulting coated substrate provides enhanced performance with respect to wear resistance and tool life compared to previous coated substrates that incorporate cBN as a coating material, particular such tools as are used for cutting steel.

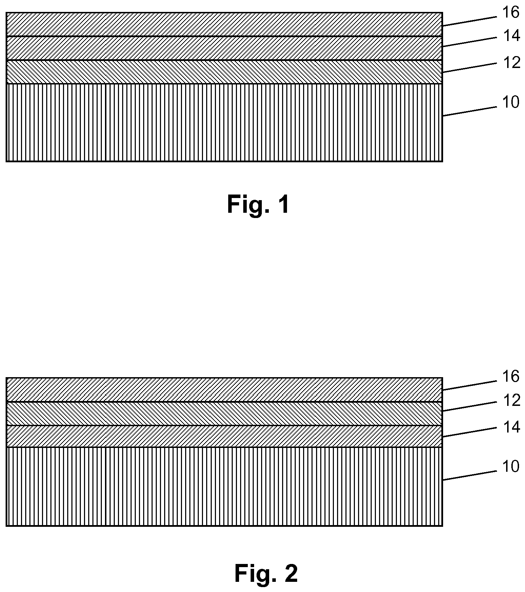

With reference to Fig. 1, a first embodiment not according to the present invention for use in connection with a cutting tool insert may be described. Substrate 10 may be any material appropriate to the application, such as a ceramic material, a carbide, PCBN compacts or tips, cermet, or steel. For carbides, they can be any substrate with particle size from nano- to micro-sized range with 2%-14% Co or Ni as binder. Further, the carbides include any substrates with alloy phases such as TaC and TiC. For ceramics, they can be nitrides such as Si₃N₄ of alpha and beta phases, oxides such as Al₂O₃ with or without TiC, and enhancing agents such as SiC whiskers. The first coating layer on substrate 10 is layer 12, which is a composite layer comprising cBN particles, ranging from nanometer to microns, preferably in the range of 100nm to 4000nm. The composite includes, in addition to the cBN particles, carbon, carbides, carbonitrides, borides, and oxides in ratio of materials ranging from 20% to 60%, depending upon applications. Layer 14 is first stacked ceramic layer, which is formed of carbon, carbides, carbonitrides, oxides, or any combination of these materials. Layer 16 is a second stacked ceramic layer. It should be understood that in various embodiments, there may be more than two of these layers. Further, in other embodiments multiple repetitions of this structure, such as, for example, two groupings of layers one over the other, where each grouping comprises a composite cBN layer 12 and first and second stacked ceramic layers, with the thickness of each layer ranging from 200 nm to 10 microns, are also included.

Referring now to Fig. 2, a second embodiment, which is according to the invention may be described where the ordering of layers has been modified. In this embodiment, the composite cBN layer 12 has been deposited between the first and second ceramic layers 14 and 16. The composite cBN layer 12 thus serves as an interfacial layer between first and second ceramic layers 14 and 16. Depending on the coating chemistry, with this coating configuration, it can modify the tool wear profile.

The coating configuration form are produced by sequential processes including, for the first embodiment not according to the invention, (A) spray deposition of cBN particles as a coating preform, and followed by chemical vapor infiltration of ceramic phase(s), then repeating the deposition and infiltration process; for the second embodiment according to the invention, (B) vapor deposition (either physical vapor deposition or chemical vapor deposition or both) to create layers of ceramic phases, then spray or deposition of cBN particles, followed by chemical vapor infiltration of ceramic phase(s); In spray deposition of cBN particles of 100nm to 5000nm, coating preform thickness can be up to a few tens of microns. In chemical vapor infiltration, the temperature is in the range of 850° C. to 1100° C., with infiltration time between 120 minutes and 2400 minutes. Each layer is bonded by microwave sintering, infrared (IR) heating, laser radiation, or any combination of the above.

This invention, as illustrated and described herein, can be used for cutting tools, such as for inserts used for cutting tools and machines. It may also, however, be applied to other applications, where wear resistance, erosion prevention, or corrosion protection, or thermal protection are desired qualities.

The present invention has been described with reference to certain preferred and alternative embodiments that are intended to be exemplary only and not limiting to the full scope of the present invention as set forth in the appended claims.

## Claims

1. A method of forming a multi-layer coated substrate, comprising the steps of:
a. spraying a first ceramic material onto the substrate to form a ceramic layer, wherein the ceramic material is formed of at least one of carbides, carbonitrides, borides, carbon, and oxides;
b. spraying cBN particles onto the ceramic layer;
c. infiltrating a second ceramic material into the cBN particles wherein the second ceramic material is chosen from the set consisting of carbides, carbonitrides, borides, carbon, and oxides, and wherein the infiltration step is performed by a chemical vapor infiltration (CVI) process to create a composite cBN particle layer;
d. bonding the cBN composite layer by a method selected from the set consisting of microwave sintering, infrared (IR) heating or, laser radiation; and
e. spraying a third ceramic material onto the cBN composite layer to form a second ceramic layer, wherein the ceramic material comprises at least one of carbides, carbonitrides, borides, carbon, and oxides.

2. The method of claim 1, further comprising the steps of:
a. spraying cBN particles onto the cBN composite layer;
b. infiltrating a third ceramic material wherein the third ceramic material is chosen from the set consisting of carbides, carbonitrides, borides, carbon, and oxides, and wherein the third ceramic material is different from the second ceramic material, and further wherein the infiltrating step is performed by a chemical vapor infiltration (CVI) process to create a second composite cBN particle layer adjacent to the cBN composite layer; and
c. bonding the second cBN composite layer by a method selected from the set consisting of microwave sintering, infrared (IR) heating or laser radiation.

3. The method of claim 1, wherein the infiltrating step is performed at a temperature in the range of 850°C. to 1100° C.

4. The method of claim 3, wherein the infiltrating step is performed for a duration of 120 minutes to 2400 minutes.

## Patentansprüche

1. Verfahren zum Bilden eines mehrschichtigen beschichteten Substrats, umfassend die Schritte:
a. Aufsprühen eines ersten Keramikmaterials auf das Substrat zur Bildung einer Keramikschicht, wobei das Keramikmaterial aus Carbiden, Carbonitriden, Boriden, Kohlenstoff und / oder Oxiden gebildet ist;
b. Aufsprühen von cBN-Partikeln auf die Keramikschicht;
c. Infiltration eines zweiten Keramikmaterials in die cBN-Partikel, wobei das zweite Keramikmaterial aus dem Satz ausgewählt ist, der aus Carbiden, Carbonitriden, Boriden, Kohlenstoff und Oxiden besteht, und wobei der Infiltrationsschritt durch ein chemisches Dampfinfiltrationsverfahren (CVI) durchgeführt wird, um ein solches zu erzeugen eine zusammengesetzte cBN-Partikelschicht;
d. Verbinden der cBN-Verbundschicht durch ein Verfahren, das aus dem Satz ausgewählt ist, der aus Mikrowellensintern, Infrarot (IR) -Erhitzen oder Laserstrahlung besteht; und
e. Sprühen eines dritten Keramikmaterials auf die cBN-Verbundschicht, um eine zweite Keramikschicht zu bilden, wobei das Keramikmaterial Carbide, Carbonitride, Boride, Kohlenstoff und / oder Oxide umfasst.

2. Verfahren nach Anspruch 1, ferner umfassend die Schritte:
a. Aufsprühen von cBN-Partikeln auf die cBN-Verbundschicht;
b. Infiltrieren eines dritten Keramikmaterials, wobei das dritte Keramikmaterial aus dem Satz ausgewählt ist, der aus Carbiden, Carbonitriden, Boriden, Kohlenstoff und Oxiden besteht, und wobei sich das dritte Keramikmaterial von dem zweiten Keramikmaterial unterscheidet, und wobei ferner der Infiltrationsschritt durchgeführt wird durch ein chemisches Dampfinfiltrationsverfahren (CVI-Verfahren), um eine zweite zusammengesetzte cBN-Partikelschicht neben der cBN-Verbundschicht zu erzeugen; und
c. Binden der zweiten cBN-Verbundschicht durch ein Verfahren, das aus dem Satz ausgewählt ist, der aus Mikrowellensintern, Infrarot (IR) -Erhitzen oder Laserstrahlung besteht.

3. Verfahren nach Anspruch 1, wobei der Infiltrationsschritt bei einer Temperatur im Bereich von 850° C bis 1100° C durchgeführt wird.

4. Verfahren nach Anspruch 3, wobei der Infiltrationsschritt für eine Dauer von 120 Minuten bis 2400 Minuten durchgeführt wird.

## Revendications

1. Procédé de formation d'un substrat multicouche revêtu, comprenant les étapes consistant à:
a. pulvériser un premier matériau céramique sur le substrat pour former une couche céramique, le matériau céramique étant formé d'au moins l'un des carbures, des carbonitrures, des borures, du carbone et des oxydes;
b. pulvériser des particules de cBN sur la couche de céramique;
c. infiltrer un second matériau céramique dans les particules de cBN dans lequel le second matériau céramique est choisi dans l'ensemble constitué de carbures, carbonitrures, borures, carbone et oxydes et dans lequel l'étape d'infiltration est réalisée par un procédé d'infiltration chimique en phase vapeur (CVI) pour créer une couche de particules de cBN composite;
d. liaison de la couche composite de cBN par un procédé choisi dans l'ensemble consistant en un frittage par micro-ondes, un chauffage par infrarouge (IR) ou un rayonnement laser; et
e. pulvériser un troisième matériau céramique sur la couche composite de cBN pour former une deuxième couche céramique, le matériau céramique comprenant au moins l'un des carbures, des carbonitrures, des borures, du carbone et des oxydes.

2. Procédé selon la revendication 1, comprenant en outre les étapes consistant à:
a. pulvériser des particules de cBN sur la couche composite de cBN;
b. infiltrer un troisième matériau céramique dans lequel le troisième matériau céramique est choisi dans l'ensemble constitué de carbures, carbonitrures, borures, carbone et oxydes, et dans lequel le troisième matériau céramique est différent du deuxième matériau céramique et dans lequel l'étape d'infiltration est effectuée par un processus d'infiltration chimique en phase vapeur (CVI) pour créer une seconde couche de particules de cBN composite adjacente à la couche composite de cBN; et
c. liaison de la deuxième couche composite de cBN par un procédé choisi dans l'ensemble constitué par le frittage par micro-ondes, le chauffage par infrarouge (IR) ou le rayonnement laser.

3. Procédé selon la revendication 1, dans lequel l'étape d'infiltration est réalisée à une température dans la plage de 850° C à 1100° C.

4. Procédé selon la revendication 3, dans lequel l'étape d'infiltration est réalisée pendant une durée de 120 minutes à 2400 minutes.
